# EUROPÄISCHE PATENTSCHRIFT

(11) **EP 0 582 563 B1**
(45) Veröffentlichungstag und Bekanntmachung des Hinweises auf die Patenterteilung: **12.03.1997**
(21) Anmeldenummer: 93890149.3
(22) Anmeldetag: 28.07.1993
(51) Int. Cl.: B60K 7/00, B61C 9/46, B61C 9/50, H02K 9/197

(54) **Schienenfahrzeug-Direktantrieb für ein Fahrzeugrad**
Direct drive for a wheel of a railway vehicle
Propulsion directe pour une voue de véhicule de chemin de fer

(30) Priorität: 05.08.1992 AT 1587/92
(43) Veröffentlichungstag der Anmeldung: 09.02.1994
(73) Patentinhaber: ABB Daimler-Benz Transportation Austria GmbH, 2351 Wiener Neudorf (AT)
(72) Erfinder: Hundstorfer, Ernst, Ing., A-2344 Maria Enzersdorf am Gebirge (DE); Wegener, Paul, Dipl.-Ing., D-68259 Mannheim (DE)
(74) Vertreter: Köhler-Pavlik, Johann, Dipl.-Ing.

(56) Entgegenhaltungen:
- EP-A- 0 337 032
- EP-A- 0 342 554
- EP-A- 0 413 337
- EP-A- 0 464 929
- FR-A- 2 257 477
- FR-A- 2 281 850
- FR-A- 2 561 593

## Beschreibung

### Beschreibung für folgende Vertragsstaaten : AT, BE, IT, NL

Die Erfindung betrifft einen Schienenfahrzeug-Direktantrieb für ein Fahrzeugrad gemäß dem Oberbegriff des Patentanspruches 1.

Aus der EP-A1-0 413 337 ist ein Antrieb dieser Art bekannt, bei dein ein Gleichstrommotor mit einen, Einzelrad direkt gekoppelt ist. Die Konstruktion ist durch die Kompliziertheit des Kommutators des Gleichstrommotors und die Störanfälligkeit des Gleichstrommotors nachteilig. Durch Verwendung eines Getriebes ist diese Ausführungsform auch raum- und arbeitsaufwendig, sodaß Bestrebungen im Gange waren, einen getriebelosen Wechselstrommotor mit dem Rad unmittelbar zu verbinden.

Schienenfahrzeug-Direktantriebe unter Verwendung von Wechselstrommotoren sind aus der FR-A-2 281 850 und der FR-A-2 257 477 bekannt. Beim Gegenstand der FR-A-2 281 850 handelt es sich um einen Außenläufermotor, bei welchem der Stator auf einer mit dem Fahrwerk verbundenen Achse sitzt und der Rotor beide Räder antreibt. In der FR-A-2 257 477 ist ein Fahrgestell mit elastischen Rädern für hohe Geschwindigkeiten geoffenbart, wobei der Stator auf einer jeweils zwei Räder tragenden Achse radial außerhalb der mit den Rädern verbundenen Rotoren sitzt. Diese Ausführungsformen sind in Achsrichtung relativ breit und engen den Fahrgastraum speziell bei Niederflur-Schienenfahrzeugen sehr ein.

Die Entwicklungen mit Wechselstrommotoren scheiterte an dem Vorurteil der Fachwelt, daß solche Motoren hohe Verluste aufweisen.

Aufgabe der Erfindung ist die Schaffung von Maßnahmen, durch welche in Überwindung des bestehenden Vorurteils ein getriebeloser Wechselstrommotor unmittelbar am Rad angebracht werden kann, ohne die Nachteile hoher Verluste in Kauf nehmen zu müssen.

Diese Aufgabe wird erfindungsgemäß durch die Maßnahme nach dem kennzeichnenden Teil des Patentanspruches 1 gelöst.

Weitere Vorteile des erfindungsgemäßen Antriebes ergeben sich aus den Merkmalen der Unteransprüche 2 bis 4.

Für eine vorteilhafte Kühlung dient das Merkmal des Patentanspuches 5.

Zur Zufuhr des Kühlmittels ist eine Maßnahme nach Anspruch 6 vorgesehen.

Für eine vorteilhafte Führung des Kühlmittels ist das Merkmal des Anspruches 7 vorgesehen. Eine zweckmäßige Weiterausbildung dieses Merkmales ist in den Ansprüchen 8 und 9 gekennzeichnet.

Zur Verhinderung einer axialen Bewegung des die Enden von Kupferstäben des Rotors leitend verbindenden Ringes ist die Maßnahme nach Anspruch 11 vorgesehen.

Die Erfindung wird anhand der Zeichnung näher erläutert, in welchen ein Ausführungsbeispiel des erfindungsgemäßen Antriebes dargestellt ist.

Es zeigen
Fig. 1 einen Querschnitt des Antriebes für ein Schienenrad und
Fig. 2 in der linken Hälfte einen Schnitt nach der Linie II-II der Fig. 1 und in der rechten Hälfte eine Stirnansicht des Antriebes und
Fig. 3 die Verbindung der Lagerschilder mit den Enden eines den Stator umschließenden zylindrischen Gehäuses in größerem Maßstab.

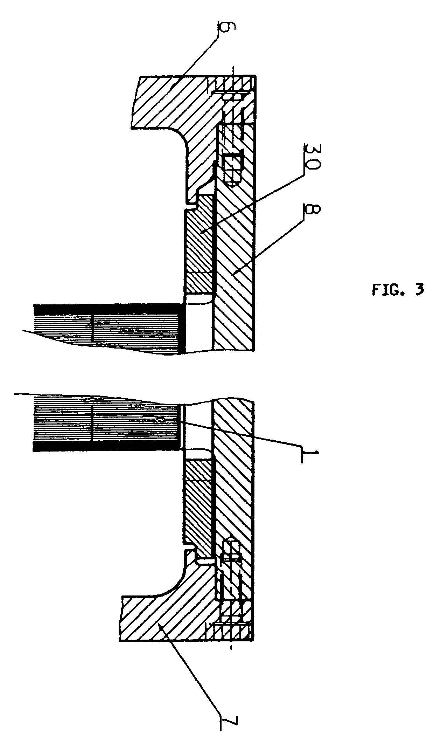

Der in den Figuren dargestellte Motor ist ein Außenläufer-Drehstrommotor, insbesondere ein dreiphasiger Asynchronmotor mit Kurzschlußläufer, welcher aus einem feststehenden Teil, dem Ständer oder Stator 1 und einem umlaufenden Teil, dem Läufer oder Rotor 2 besteht, welcher in Winkelabständen in Nuten verlaufende Kupferstäbe aufweist, deren Enden zu beiden Seiten des Rotors durch einen Kurzschlußring 30 miteinander leitend verbunden sind. Der Ständer 1 besitzt eine Achse 3, welche über Wälzlager 4, 5 in je einem Lagerschild 6 bzw. 7 des Rotors 2 gelagert ist. Die Lagerschilder 6, 7 sind, wie Fig. 3 zeigt, formschlüssig mit den Enden eines den Stator umschließenden zylindrischen Gehäuses 8 verbunden, durch Schrauben 10 gesichert und besitzen an einer innenseitigen, in das Gehäuse 8 eingreifenden Ringwand mindestens eine, vorzugsweise ringförmige Nase 32 zur Führung einer sie übergreifenden, vorzugsweise ebenfalls ringförmigen Nase 31 des Kurzschlußringes 30, wodurch verhindert wird, daß dieser sich in axialer Richtung bewegen kann. Das Gehäuse 8 kann massiv, geblecht oder teilweise geblecht sein und sitzt in einem Radreifen 9 eines Schienenrades für Niederflurwagen und ist durch Preßsitz oder eine elastische Verbindung mit dem Radreifen verbunden. Es besteht auch die Möglichkeit, das Gehäuse 8 mit dem Radreifen 9 einstückig auszuführen.

Der Motor ist gekühlt, vorzugsweise mit Wasser. Zu diesem Zwecke ist in der Oberfläche der Achse 3 ein schraubenförmiger Kanal 11 ausgespart. Zur Versorgung des Kanals 11 mit Kühlwasser und Abfuhr desselben sind in der Achse 3 zwei parallele Kanäle 12, 13 vorgesehen, von welchen der eine den Zufluß und der andere den Abfluß besorgt. Die beiden Kanäle 12 und 13 münden überje einen radialen Kanal 14 bzw. 15 in den Kanal 11 jeweils an einem Ende desselben. Die Zufuhr des Kühlwassers kann durch die Kanäle 13, 14 und die Abfuhr durch die Kanäle 12, 15 erfolgen. Der Kanal 11 ist durch ein Rohr 16 abgedeckt, welches eine Paßfeder 17 trägt, durch welche ein Ständerblechpaket 18, welches auf die Achse 3 aufgeschichtet ist, gegen Drehung gesichert wird. Das Blechpaket 18 wird durch endseitige am Rohr 16 befestigte Preßringe 19, 20 zusammengepreßt. Die Montage erfolgt in der Weise, daß auf das Rohr 16 der Preßring 19 aufgezogen wird, worauf die Bleche auf das Rohr 16 geschichtet werden. Abschließend wird der Preßring 20 aufgesetzt und mit dem Rohr 16 verschweißt. In die Nuten 21 der Eisenbleche wird die Drehstromwicklung eingebettet, für welche drei Phasenanschlüsse 22 in einer Bohrung 23 der Achse 3 vorgesehen sind. Im Rahmen der Erfindung besteht die Möglichkeit, die Paßfeder 17 und die sie aufnehmenden Nuten 24 und 25 im Rohr 16 bzw. im Blechpaket 18 durch Aufschrumpfen der Bleche 18 am Rohr 16 zu ersetzen.

Selbstverständlich können im Rahmen der Erfindung auch andere Verwendungszwecke der erfindungsgemäßen Konstruktion vorgenommen werden. So ist es beispielsweise möglich, den Nabenmotor in einem anderen Rad, z. B. einem Gummirad eines Wagens, welcher auf der Straße gefahren wird, zu verwenden.

### Beschreibung für folgende Vertragsstaaten : CH, DE, LI

Die Erfindung betrifft einen Schienenfahrzeug-Direktantrieb für ein Fahrzeugrad gemäß dem Oberbegriff des Patentanspruches 1.

Aus der EP-A1-0 413 337 ist ein Antrieb dieser Art bekannt, bei dem ein Gleichstrommotor mit einem Einzelrad direkt gekoppelt ist. Die Konstruktion ist durch die Kompliziertheit des Kommutators des Gleichstrommotors und die Störanfälligkeit des Gleichstrommotors nachteilig. Durch Verwendung eines Getriebes ist diese Ausführungsform auch raum- und arbeitsaufwendig, sodaß Bestrebungen im Gange waren, einen getriebelosen Wechselstrommotor mit dem Rad unmittelbar zu verbinden.

Schienenfahrzeug-Direktantriebe unter Verwendung von Wechselstrommotoren sind aus der FR-A-2 281 850 und der FR-A-2 257 477 bekannt. Beim Gegenstand der FR-A-2 281 850 handelt es sich um einen Außenläufermotor, bei welchem der Stator auf einer mit dem Fahrwerk verbundenen Achse sitzt und der Rotor beide Räder antreibt. In der FR-A-2 257 477 ist ein Fahrgestell mit elastischen Rädern für hohe Geschwindigkeiten geoffenbart, wobei der Stator auf einer jeweils zwei Räder tragenden Achse radial außerhalb der mit den Rädern verbundenen Rotoren sitzt. Diese Ausführungsformen sind in Achsrichtung relativ breit und engen den Fahrgastraum speziell bei Niederflur-Schienenfahrzeugen sehr ein.

Aus der EP-A-0 579 084 ist ein kompakter, wartungsfreundlicher und konstruktiv einfacher Antriebsmotor für ein Fahrzeugrad, das auf einem Achsstummel gelagert ist bekannt. Dabei ist als Antriebsmotor ein Außenläufermotor vorgesehen, dessen Ständerblechpaket auf dem Achsstummel sitzt und dessen Außenläufer als Radträger ausgebildet ist. Unter Bezugnahme auf die EP-A-0 579 084 wurde das Schutzbegehren freiwillig eingeschränkt und gesonderte Patentansprüche für CH, DE und LI vorgelegt.

Die Entwicklungen mit Wechselstrommotoren scheiterte an dem Vorurteil der Fachwelt, daß solche Motoren hohe Verluste aufweisen.

Aufgabe der Erfindung ist die Schaffung von Maßnahmen, durch welche in Überwindung des bestehenden Vorurteils ein getriebeloser Wechselstrommotor unmittelbar am Rad angebracht werden kann, ohne die Nachteile hoher Verluste in Kauf nehmen zu müssen.

Diese Aufgabe wird erfindungsgemäß durch die Maßnahme nach dem kennzeichnenden Teil des Patentanspruches 1 gelöst.

Für eine vorteilhafte Kühlung dient das Merkmal des Patentanspuches 2.

Zur Zufuhr des Kühlmittels ist eine Maßnahme nach Anspruch 3 vorgesehen.

Für eine vorteilhafte Führung des Kühlmittels ist das Merkmal des Anspruches 4 vorgesehen. Eine zweckmäßige Weiterausbildung dieses Merkmales ist in den Ansprüchen 5 und 6 gekennzeichnet.

Zur Verhinderung einer axialen Bewegung des die Enden von Kupferstäben des Rotors leitend verbindenden Ringes ist die Maßnahme nach Anspruch 8 vorgesehen.

Weitere Vorteile des erfindungsgemäßen Antriebes ergeben sich aus den Merkmalen der Unteransprüche 9 bis 11.

Die Erfindung wird anhand der Zeichnung näher erläutert, in welchen ein Ausführungsbeispiel des erfindungsgemäßen Antriebes dargestellt ist.

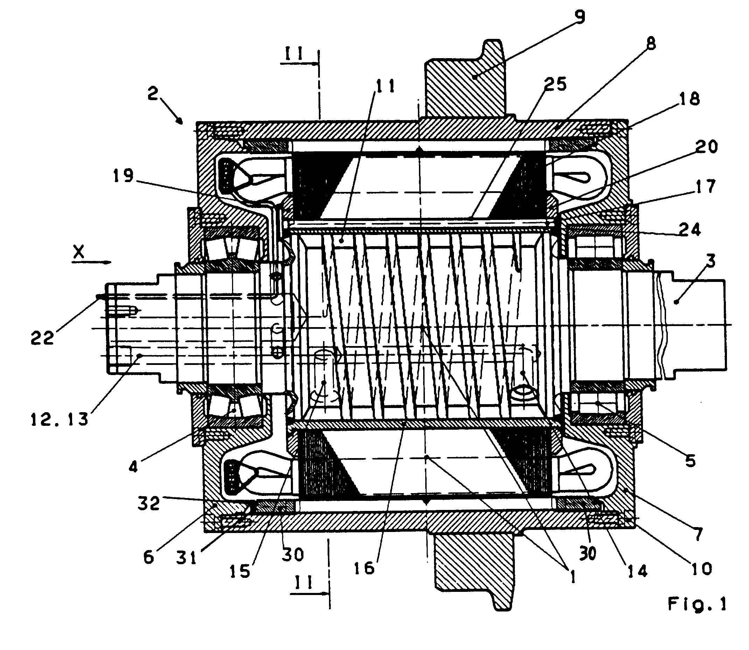

Es zeigen
Fig. 1 einen Querschnitt des Antriebes für ein Schienenrad und

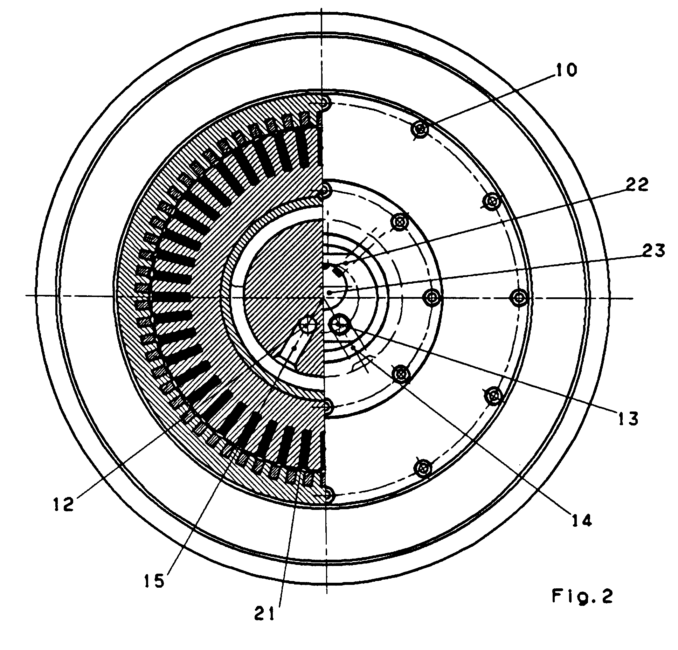

Fig. 2 in der linken Hälfte einen Schnitt nach der Linie II-II der Fig. 1 und in der rechten Hälfte eine Stirnansicht des Antriebes und
Fig. 3 die Verbindung der Lagerschilder mit den Enden eines den Stator umschließenden zylindrischen Gehäuses in größerem Maßstab.

Der in den Figuren dargestellte Motor ist ein Außenläufer-Drehstrommotor, insbesondere ein dreiphasiger Asynchronmotor mit Kurzschlußläufer, welcher aus einem feststehenden Teil, dem Ständer oder Stator 1 und einem umlaufenden Teil, dem Läufer oder Rotor 2 besteht, welcher in Winkelabständen in Nuten verlaufende Kupferstäbe aufweist, deren Enden zu beiden Seiten des Rotors durch einen Kurzschlußring 30 miteinander leitend verbunden sind. Der Ständer 1 besitzt eine Achse 3, welche über Wälzlager 4, 5 in je einem Lagerschild 6 bzw. 7 des Rotors 2 gelagert ist. Die Lagerschilder 6, 7 sind, wie Fig. 3 zeigt, formschlüssig mit den Enden eines den Stator umschließenden zylindrischen Gehäuses 8 verbunden, durch Schrauben 10 gesichert und besitzen an einer innenseitigen, in das Gehäuse 8 eingreifenden Ringwand mindestens eine, vorzugsweise ringförmige Nase 32 zur Führung einer sie übergreifenden, vorzugsweise ebenfalls ringförmigen Nase 31 des Kurzschlußringes 30, wodurch verhindert wird, daß dieser sich in axialer Richtung bewegen kann. Das Gehäuse 8 kann massiv, geblecht oder teilweise geblecht sein und sitzt in einem Radreifen 9 eines Schienerrades für Niederflurwagen und ist durch Preßsitz oder eine elastische Verbindung mit dem Radreifen verbunden. Es besteht auch die Möglichkeit, das Gehäuse 8 mit dem Radreifen 9 einstückig auszuführen.

Der Motor ist gekühlt, vorzugsweise mit Wasser. Zu diesem Zwecke ist in der Oberfläche der Achse 3 ein schraubenförmiger Kanal 11 ausgespart. Zur Versorgung des Kanals 11 mit Kühlwasser und Abfuhr desselben sind in der Achse 3 zwei parallele Kanäle 12, 13 vorgesehen, von welchen der eine den Zufluß und der andere den Abfluß besorgt. Die beiden Kanäle 12 und 13 münden über je einen radialen Kanal 14 bzw. 15 in den Kanal 11 jeweils an einem Ende desselben. Die Zuführ des Kühlwassers kann durch die Kanäle 13, 14 und die Abführ durch die Kanäle 12, 15 erfolgen. Der Kanal 11 ist durch ein Rohr 16 abgedeckt, welches eine Paßfeder 17 trägt, durch welche ein Standerblechpaket 18, welches auf die Achse 3 aufgeschichtet ist, gegen Drehung gesichert wird. Das Blechpaket 18 wird durch endseitige am Rohr 16 befestigte Preßringe 19, 20 zusammengepreßt. Die Montage erfolgt in der Weise, daß auf das Rohr 16 der Preßring 19 aufgezogen wird, worauf die Bleche auf das Rohr 16 geschichtet werden. Abschließend wird der Preßring 20 aufgesetzt und mit dem Rohr 16 verschweißt. In die Nuten 21 der Eisenbleche wird die Drehstromwicklung eingebettet, für welche drei Phasenanschlüsse 22 in einer Bohrung 23 der Achse 3 vorgesehen sind. Im Rahmen der Erfindung besteht die Möglichkeit, die Paßfeder 17 und die sie aufnehmenden Nuten 24 und 25 im Rohr 16 bzw. im Blechpaket 18 durch Aufschrumpfen der Bleche 18 am Rohr 16 zu ersetzen.

Selbstverständlich können im Rahmen der Erfindung auch andere Verwendungszwecke der erfindungsgemäßen Konstruktion vorgenommen werden. So ist es beispielsweise möglich, den Nabenmotor in einem anderen Rad, z. B. einem Gummirad eines Wagens, welcher auf der Straße gefahren wird, zu verwenden.

## Patentansprüche (Patentansprüche für folgende(n) Vertragsstaat(en): AT, BE, IT, NL)

1. Schienenfahrzeug-Direktantrieb für ein Fahrzeugrad, insbesondere für ein Rad eines Schienenfahrzeuges, vorzugsweise in Niederflurwagen, unter Verwendung eines Wechselstrommotors, insbesondere eines Asynchronmotors, bei welchem der Motor ein Außenläufer ist, bei dem der Rotor (2) mittels der Lagerung des Rades (9) gelagert ist, wobei der Stator (1) eine gekühlte, vom Fahrwerksrahmen, Drehgestellrahmen od. dgl. getragene Welle (3) aufweist, auf welcher ein Blechpaket mit Nuten (21) zur Aufnahme der Wicklungen sitzt, dadurch gekennzeichnet, daß ein den Rotor (2) eines Außenläufer-Nabenmotors bildendes Gehäuse (8) in lediglich einem Rad bzw. Radreifen (9) sitzend mit lediglich diesem einen Rad bzw. Radreifen (9) antriebsweise verbunden ist.

2. Antrieb nach Anspruch 1, dadurch gekennzeichnet, daß der Rotor (2) mit dem Rad bzw. Radreifen (9) durch einen Preßsitz verbunden ist.

3. Antrieb nach Anspruche 1, dadurch gekennzeichnet, daß der Rotor (2) mit dem Rad bzw. Radreifen (9) elastisch verbunden ist.

4. Antrieb nach Anspruch 1, dadurch gekennzeichnet, daß der Motor ein Asynchronmotor mit Kurzschlußläufer ist.

5. Antrieb nach Anspruch 1, dadurch gekennzeichnet, daß die Achse (3) des Stators (1) auf ihrer Oberfläche einen schraubenförmig verlaufenden Kanal (11) aufweist, welcher durch ein die Achse (3) des Stators umschließendes Rohr (16) abgedeckt ist.

6. Antrieb nach Anspruch 5, dadurch gekennzeichnet, daß in der Achse (3) zwei Kanäle (12, 13) parallel zur Rotorachse verlaufen, wobei aus dem einen Kanal (13) ein radialer Kanal (14) in den letzten Gang und aus dem anderen Kanal (12) ein radialer Kanal (15) in den ersten Gang des schraubenförmigen Kanals (11) mündet.

7. Antrieb nach zumindest einem der Ansprüche 5 oder 6, dadurch gekennzeichnet, daß auf dem den schraubenförmigen Kanal (11) abdeckenden Rohr (16) ein Blechpaket (18) zur Aufnahme der Wicklungen sitzt, welches durch zwei Preßringe (19, 20) zusammengepreßt ist, die am Rohr (16) befestigt sind, wobei vorzugsweise einer aufgeschweißt und der andere aufgezogen ist.

8. Antrieb nach Anspruch 7, dadurch gekennzeichnet, daß das Blechpaket (18) mit dem Rohr (16) durch mindestens eine Paßfeder (17) drehfest gekoppelt ist.

9. Antrieb nach Anspruch 7, dadurch gekennzeichnet, daß das Blechpaket (18) am Rohr (16) aufgeschrumpft ist.

10. Antrieb nach Anspruch 1, dadurch gekennzeichnet, daß in der Statorachse (3) mindestens eine Längsbohrung (23) vorgesehen ist.

11. Antrieb nach Anspruch 1, dadurch gekennzeichnet, daß der Rotor (2) mit seitlichen Lagerschildern (6, 7) formschlüssig verbunden ist, welche innenseitig mindestens eine vorzugsweise ringfömige Nase (32) aufweisen, die mit einer Nase (31) eines die Enden von Kupferstäben des Rotors (2) leitend verbindenden Ring (30) zusammenwirken.

## Patentansprüche (Patentansprüche für folgende(n) Vertragsstaat(en): CH, DE, LI)

1. Schienenfahrzeug-Direktantrieb für ein Fahrzeugrad, insbesondere für ein Rad eines Schienenfahrzeuges, vorzugsweise in Niederflurwagen, unter Verwendung eines Wechselstrommotors, insbesondere eines Asynchronmotors, bei welchem der Motor ein Außenläufer-Nabenmotors ist, dessen Rotor (2) das Gehäuse (8) des Motors bildet und mittels der Lagerung des Rades (9) gelagert ist, dadurch gekennzeichnet, daß der Rotor (2) in lediglich einem Rad bzw. Radreifen (9) sitzend mit diesem antriebsweise verbunden ist, und der Stator (1) auf einer gekühlten, vom Fahrwerksrahmen, Drehgestellrahmen od. dgl. getragenen Achse (3) sitzt und ein Blechpaket mit Nuten (21) zur Aufnahme der Wicklungen aufweist.

2. Antrieb nach Anspruch 1, dadurch gekennzeichnet, daß die Achse (3) des Stators (1) auf ihrer Oberfläche einen schraubenförmig verlaufenden Kanal (11) aufweist, welcher durch ein die Achse (3) des Stators umschließendes Rohr (16) abgedeckt ist.

3. Antrieb nach Anspruch 2, dadurch gekennzeichnet, daß in der Achse (3) zwei Kanäle (12, 13) parallel zur Rotorachse verlaufen, wobei aus dem einen Kanal (13) ein radialer Kanal (14) in den letzten Gang und aus dem anderen Kanal (12) ein radialer Kanal (15) in den ersten Gang des schraubenförmigen Kanals (11) mündet.

4. Antrieb nach zumindest einem der Ansprüche 2 oder 3, dadurch gekennzeichnet, daß auf dem den schraubenförmigen Kanal (11) abdeckenden Rohr (16) ein Blechpaket (18) zur Aufnahme der Wicklungen sitzt, welches durch zwei Preßringe (19, 20) zusammengepreßt ist, die am Rohr (16) befestigt sind, wobei vorzugsweise einer aufgeschweißt und der andere aufgezogen ist.

5. Antrieb nach Anspruch 4, dadurch gekennzeichnet, daß das Blechpaket (18) mit dem Rohr (16) durch mindestens eine Paßfeder (17) drehfest gekoppelt ist.

6. Antrieb nach Anspruch 4, dadurch gekennzeichnet, daß das Blechpaket (18) am Rohr (16) aufgeschrumpft ist.

7. Antrieb nach einem der vorhergehenden Ansprüche, dadurch gekennzeichnet, daß in der Statorachse (3) mindestens eine Längsbohrung (23) vorgesehen ist.

8. Antrieb nach einem der vorhergehenden Ansprüche, dadurch gekennzeichnet, daß der Rotor (2) mit seitlichen Lagerschildern (6, 7) formschlüssig verbunden ist, welche innenseitig mindestens eine vorzugsweise ringfömige Nase (32) aufweisen, die mit einer Nase (31) eines die Enden von Kupferstäben des Rotors (2) leitend verbindenden Ring (30) zusammenwirken.

9. Antrieb nach einem der vorhergehenden Ansprüche, dadurch gekennzeichnet, daß der Rotor (2) mit dem Rad bzw. Radreifen (9) durch einen Preßsitz verbunden ist.

10. Antrieb nach einem der Ansprüche 1 bis 8, dadurch gekennzeichnet, daß der Rotor (2) mit dem Rad bzw. Radreifen (9) elastisch verbunden ist.

11. Antrieb nach einem der vorhergehenden Ansprüche, dadurch gekennzeichnet, daß der Motor ein Asynchronmotor mit Kurzschlußläufer ist.

## Claims (Claims for the following Contracting State(s): AT, BE, IT, NL)

1. A rail vehicle direct drive for a vehicle wheel, more particularly for a wheel of a rail vehicle, more particularly in dropped floor wagons, using a d.c. motor, more particularly an asynchronous motor, in which the motor is an outside rotor, wherein the rotor (2) is mounted via the bearing of the wheel (9), while the stator (2) has a cooled shaft (3) which is borne by the frame of the chassis, bogie or the like, and on which a bundle of laminations formed with grooves (21) for receiving the windings is disposed, characterised in that a casing (8) forming the rotor (2) of an outside rotor wheelhub motor is disposed in only one wheel or wheel rim (9) and is drivably connected only to such wheel or wheel rim (9).

2. A drive according to Claim 1, characterised in that the rotor (2) is connected to the wheel or wheel rim (9) by a force fit.

3. A drive according to Claim 1, characterised in that the rotor (2) is resiliently connected to the wheel or wheel rim (9).

4. A drive according to Claim 1, characterised in that the motor is an asynchronous motor having a short-circuited rotor.

5. A drive according to Claim 1, characterised in that the surface of the shaft (3) of the stator (1) is formed with a helically extending channel (11) which is covered by a tube (16) enclosing the shaft (3) of the stator.

6. A drive according to Claim 5, characterised in that in the shaft (3) two channels (12, 13) extend parallel with the rotor axis, by radial channel (14) discharging from one channel (13) into the last turn of the helical channel (11), and a radial channel (15) is charging from the other channel (12) into the first turn thereof.

7. A drive according to at least one of Claims 5 or 6, characterised in that disposed on the tube (16) covering the helical channel (11) is a bundle of laminations (18) which receives the windings and which is pressed together pressing rings (19, 20) which are attached to the tube (16), one ring being preferably welded on and the other drawn on.

8. A drive according to Claim 7, characterised in that the bundle of laminations (18) is non-rotatably coupled to the tube (16) via at least one feather key (17).

9. A drive according to Claim 7, characterised in that the bundle of laminations (18) is shrunk onto the tube (16).

10. A drive according to Claim 1, characterised in that the stator shaft (3) is formed with at least one longitudinal bore (23).

11. A drive according to Claim 1, characterised in that the rotor (2) is positively connected to lateral bearing plates (6, 7) which have on the inside at least one preferably annular lug (32) cooperating with a lug (31) of a ring (30) conductively connecting the ends of copper rods of the rotor (2).

## Claims (Claims for the following Contracting State(s): CH, DE, LI)

1. A rail vehicle direct drive for a vehicle, more particularly for a wheel of a rail vehicle, preferably in dropped floor wagons, using a d.c. motor, more particularly an asynchronous motor, wherein the motor is an outside rotor hubwheel motor whose rotor (2) forms the casing (8) of the motor and is mounted via the bearing of the wheel (9), characterised in that the rotor (2) is disposed in only one wheel or wheel rim (9) and is drivably connected thereto, and the stator (1) is disposed on a cooled shaft (3), borne by the frame of the chassis, bogie or the like, and has a bundle of laminations formed with grooves (21) for receiving the windings.

2. A drive according to Claim 1, characterised in that the surface of the shaft (3) of the stator (1) is formed with a helically extending channel (11) which is covered by a tube (16) enclosing the shaft (3) of the stator.

3. A drive according to Claim 2, characterised in that in the shaft (3) two channels (12, 13) extend parallel with the rotor axis, by radial channel (14) discharging from one channel (13) into the last turn of the helical channel (11), and a radial channel (15) is charging from the other channel (12) into the first turn thereof.

4. A drive according to at least one of Claims 2 or 3, characterised in that disposed on the tube (16) covering the helical channel (11) is a bundle of laminations (18) which receives the windings and which is pressed together pressing rings (19, 20) which are attached to the tube (16), one ring being preferably welded on and the other drawn on.

5. A drive according to Claim 4, characterised in that the bundle of laminations (18) is non-rotatably coupled to the tube (16) via at least one feather key (17).

6. A drive according to Claim 4, characterised in that the bundle of laminations (18) is shrunk onto the tube (16).

7. A drive according to one of the preceding claims, characterised in that the stator shaft (3) is formed with at least one longitudinal bore (23).

8. A drive according to one of the preceding claims, characterised in that the rotor (2) is positively connected to lateral bearing plates (6, 7) which have on the inside at least one preferably annular lug (32) cooperating with a lug (31) of a ring (30) conductively connecting the ends of copper rods of the rotor (2).

9. A drive according to one of the preceding claims, characterised in that the rotor (2) is connected to the wheel or wheel rim (9) by a force fit.

10. A drive according to one of Claims 1 to 8, characterised in that the rotor (2) is resiliently connected to the wheel or wheel rim (9).

11. A drive according to one of the preceding claims, characterised in that the motor is an asynchronous motor having a short-circuited rotor.

## Revendications (Revendications pour l'(les) Etat(s) contractant(s) suivant(s): AT, BE, IT, NL)

1. Entraînement direct de véhicules ferroviaires pour une roue de véhicule automobile, en particulier pour une roue d'un véhicule ferroviaire, de préférence, dans des wagons à plate-forme surbaissée, en utilisant un moteur à courant alternatif, en particulier un moteur asynchrone, dans lequel le moteur est un moteur à induit extérieur où le rotor (2) est logé au moyen du palier de la roue (9), le stator (1) présentant un arbre (3) refroidi, qui est porté par le cadre de châssis ou le cadre de bogie ou similaire et sur lequel repose un paquet de tôles munies de rainures (21) pour le logement des enroulements, caractérisé en ce qu'un carter (8), formant le rotor (2) d'un moteur à induit externe logé dans la roue, est relié par entraînement simplement à la roue respectivement au pneu de roue (9), pneu de roue (9) sur lequel il repose simplement.

2. Entraînement selon la revendication 1, caractérisé en ce que le rotor (2) est relié à la roue respectivement au pneu de roue (9) par un ajustage serré.

3. Entraînement selon la revendication 1, caractérisé en ce que le rotor (2) est relié à la roue respectivement au pneu de roue (9) de manière élastique.

4. Entraînement selon la revendication 1, caractérisé en ce que le moteur est un moteur asynchrone avec un induit en court-circuit.

5. Entraînement selon la revendication 1, caractérisé en ce que l'axe (3) du stator (1) présente, sur sa surface, un canal (11) qui s'étend de manière hélicoïdale et qui est recouvert par un tube (16) entourant l'axe (3) du stator.

6. Entraînement selon la revendication 5, caractérisé en ce que deux canaux (12, 13) s'étendent dans l'axe (3) parallèlement à l'axe de rotor, depuis le premier canal (13), un canal radial (14) débouchant dans le dernier pas et depuis l'autre canal (12), un canal radial (15) débouchant dans le premier pas du canal hélicoïdal (11).

7. Entraînement selon l'une des revendications 5 ou 6, caractérisé en ce que, sur le tube (16) recouvrant le canal hélicoïdal (11), pour le logement des enroulements, repose un paquet de tôles (18) qui est comprimé par deux matrices (19, 20) qui sont fixées sur le tube (16), de préférence l'une étant soudée et l'autre emboutie.

8. Entraînement selon la revendication 7, caractérisé en ce que le paquet de tôles (18) est accouplé au tube (16) de manière rigide à la torsion par au moins un ressort d'ajustage (17).

9. Entraînement selon la revendication 7, caractérisé en ce que le paquet de tôles (18) est emmanché par frettage sur le tube (16).

10. Entraînement selon la revendication 1, caractérisé en ce qu'il est prévu dans l'axe de stator (3) au moins un perçage longitudinal (23).

11. Entraînement selon la revendication 1, caractérisé en ce que le rotor (2) est relié, par concordance des formes, à des flasques latéraux (6, 7) qui présentent, sur la face interne, au moins un ergot (32) de préférence annulaire, qui coopère avec un ergot (31) d'une bague (30) reliant de manière conductrice les extrémités des barres de cuivre du rotor (2).

## Revendications (Revendications pour l'(les) Etat(s) contractant(s) suivant(s): CH, DE, LI)

1. Entraînement direct de véhicules ferroviaires pour une roue de véhicule automobile, en particulier pour une roue d'un véhicule ferroviaire, de préférence, dans des wagons à plate-forme surbaissée, en utilisant un moteur à courant alternatif, en particulier un moteur asynchrone, dans lequel le moteur est un moteur à induit extérieur logé dans la roue, dont le rotor (2) forme le carter (8) du moteur, et est logé au moyen du palier de la roue (9), caractérisé en ce que le rotor (2) est relié par entraînement simplement à la roue respectivement au pneu de roue (9), sur lequel il repose simplement et en ce que le stator (1) repose sur un axe (3) refroidi, porté par le cadre de châssis, le cadre de bogie ou similaire et présente un paquet de tôles comprenant des rainures (21) pour le logement des enroulements.

2. Entraînement selon la revendication 1, caractérisé en ce que l'axe (3) du stator (1) présente, sur sa surface, un canal (11) qui s'étend de manière hélicoïdale et qui est recouvert par un tube (16) entourant l'axe (3) du stator.

3. Entraînement selon la revendication 2, caractérisé en ce que deux canaux (12, 13) s'étendent dans l'axe (3) parallèlement à l'axe de rotor, depuis le premier canal (13), un canal radial (14) débouchant dans le dernier pas et depuis l'autre canal (12), un canal radial (15) débouchant dans le premier pas du canal hélicoïdal (11).

4. Entraînement selon l'une des revendications 2 ou 3, caractérisé en ce que sur le tube (16) recouvrant le canal hélicoïdal (11), pour le logement des enroulements, repose un paquet de tôles (18) qui est comprimé par deux matrices (19, 20) qui sont fixées sur le tube (16), de préférence l'une étant soudée et l'autre emboutie.

5. Entraînement selon la revendication 4, caractérisé en ce que le paquet de tôles (18) est accouplé au tube (16) de manière rigide à la torsion par au moins un ressort d'ajustage (17).

6. Entraînement selon la revendication 4, caractérisé en ce que le paquet de tôles (18) est emmanché par frettage sur le tube (16).

7. Entraînement selon l'une des revendications précédentes, caractérisé en ce qu'il est prévu dans l'axe de stator (3) au moins un perçage longitudinal (23).

8. Entraînement selon l'une des revendications précédentes, caractérisé en ce que le rotor (2) est relié, par concordance des formes, à des flasques latéraux (6, 7) qui présentent, sur la face interne, au moins un ergot (32) de préférence annulaire qui coopère avec un ergot (31) d'une bague (30) reliant de manière conductrice les extrémités des barres de cuivre du rotor (2).

9. Entraînement selon l'une des revendications précédentes, caractérisé en ce que le rotor (2) est relié à la roue respectivement au pneu de roue (9) par un ajustage serré.

10. Entraînement selon l'une des revendications 1 à 8, caractérisé en ce que le rotor (2) est relié à la roue respectivement au pneu de roue (9) de manière élastique.

11. Entraînement selon l'une des revendications précédentes, caractérisé en ce que le moteur est un moteur asynchrone avec un induit en court-circuit.
